# EUROPÄISCHE PATENTSCHRIFT

(11) **EP 2 428 352 B1**
(45) Veröffentlichungstag und Bekanntmachung des Hinweises auf die Patenterteilung: **04.09.2013**
(21) Anmeldenummer: 11007421.8
(22) Anmeldetag: 13.09.2011
(51) Int. Cl.: B29C 70/44

(54) **Vakuumaufbau zur Druckbeaufschlagung eines Bauteils während seiner Herstellung und Verfahren zur Herstellung eines Bauteils**
Vacuum assembly for pressurising a component during its production and method for producing a component
Assemblage à vide pour exercer une pression sur un composant lors de sa fabrication et procédé de fabrication d'un composant

(30) Priorität: 13.09.2010 DE 102010045210
(43) Veröffentlichungstag der Anmeldung: 14.03.2012
(73) Patentinhaber: Premium AEROTEC GmbH, 86179 Augsburg (DE)
(72) Erfinder: Thaden, Bernhard, 26969 Butjadingen (DE)
(74) Vertreter: Avenhaus, Beate

(56) Entgegenhaltungen:
- US-A- 5 686 038
- US-A- 5 709 893
- US-A1- 2004 169 314
- COOKE M: "IT'S IN THE BAG", ENGINEERING. (INCL. MACHINE SHOP MAGAZINE), ENGINEERING DESIGN COUNCIL. LONDON, GB, Bd. 232, Nr. 2, 1. Februar 1992 (1992-02-01), Seiten 10-11, XP000294565, ISSN: 0013-7782

## Beschreibung

Die vorliegende Erfindung betrifft ganz allgemein die Herstellung von Bauteilen, welche während der Herstellung mit einem Druck beaufschlagt werden, wie dies beispielsweise der Fall sein kann bei der Herstellung von Bauteilen, die aus mehreren zusammenzufügenden und miteinander zu verklebenden Bauteilkomponenten gebildet werden, oder bei der Herstellung von Faserverbundbauteilen (um den Faserverbundwerkstoff zu kompaktieren und/oder in eine endkonturnahe Form zu bringen).

Aus dem Stand der Technik ist es hierzu bekannt, einen Vakuumaufbau zur Druckbeaufschlagung eines Bauteils während seiner Herstellung zu verwenden, welcher eine Basis mit einer Auflagefläche für das Bauteil und eine luftdichte, zur Auflagefläche hin abdichtbare Umhüllung (z. B. Kunststofffolie) zum Abdecken des Bauteils umfasst, um durch eine Evakuierung der eingeschlossenen Luft aus dem Innenraum der Umhüllung die Druckbeaufschlagung des Bauteils zu bewirken.

Ein derartiger Vakuumaufbau ist beispielsweise aus der DE 101 40 166 B4 bekannt und dient bei diesem Stand der Technik als Infiltrations- und Aushärtewerkzeug bei der Herstellung eines Faserverbundbauteils. Der bekannte Vakuumaufbau wird hierbei in erster Linie zur Infiltration eines textilen Halbzeuges mit einem Matrixmaterial (z. B. Harzsystem) verwendet. Darüber hinaus kann bei der nachfolgenden thermischen Aushärtung des infiltrierten Halbzeuges (Fasermaterial) vorteilhaft eine Kompaktierung bzw. endkonturnahe Formgebung erzielt werden. Als Umhüllung zum Abdecken des Bauteils wird hierbei eine luftdichte Folie verwendet, die mittels einer um den Umfang des Bauteils herum verlaufenden Dichtung zur Auflagefläche des Infiltrations- und Aushärtewerkzeuges hin abgedichtet ist. Der bekannte Vakuumaufbau dient zur Herstellung eines flächigen Faserverbundbauteils mit relativ geringer Bauteildicke, so dass die durch Evakuierung des Innenraumes der Umhüllung realisierte Druckbeaufschlagung im Wesentlichen lediglich orthogonal zur Bauteilflachseite auf das Bauteil einwirkt.

Es gibt jedoch auch Anwendungsfälle, in denen bei einer Bauteilherstellung insbesondere auch ein lateral (parallel zur Auflagefläche) auf wenigstens einen Rand des Bauteils wirkender Druck erwünscht ist. Dies ist beispielsweise der Fall, wenn bei einem Faserverbundbauteil durch einen solchen Druck auch eine gewisse Kompaktierung in lateraler Richtung und/oder Formgestaltung an einem seitlichen Bauteilrand erfolgen soll. Auch ist ein lateraler Druck z. B. dann vorteilhaft, wenn es darum geht, eine oder mehrere, einen Bauteilrand ausbildende Bauteilkomponenten bei der Herstellung des Bauteils mit einem "Bauteilkorpus" zu verbinden und/oder fest miteinander zu verbinden. Eine solche Verbindung kann z. B. als eine "klassische" Verklebung vorgesehen sein, oder auch als eine Verbindung durch so-genanntes "Co-Curing" bzw. "Co-Bonding" in der Faserverbundtechnologie.

Der vorstehend beschriebene, aus der DE 101 40 166 B4 bekannte Vakuumaufbau ist hierfür jedoch praktisch ungeeignet, da die zur Druckbeaufschlagung verwendete Folie sich in der Regel nicht vollflächig bzw. gleichmäßig an den seitlichen Bauteilrändern anschmiegt. Ein durch die Folie auf die Bauteilränder ausgeübter lateraler Druck ist daher oftmals schlecht definiert bzw. ungleichmäßig und nicht wie bei auf Endmaß gewollten Bauteilen zu begrenzen.

Um mittels eines Vakuumaufbaus der eingangs genannten Art auch eine definierte Druckbeaufschlagung eines U-förmig gestalteten Bauteils an den beiden Bauteilrändern in lateraler Richtung zu bewirken, schlägt die US 2004/0169314 A1 einen Vakuumaufbau und ein Herstellungsverfahren vor, welcher bzw. welches die Merkmale des Oberbegriffes des Anspruchs 1 bzw. des Anspruchs 5 erfüllt.

Bei dem bekannten Vakuumaufbau ist eine zusammen mit dem Bauteil im Innenraum der Umhüllung anordenbare Druckleistenanordnung vorgesehen, die aus zwei entlang der Bauteilränder verlaufenden "Formungselementen" und einem dazwischengefügten "Keilelement" gebildet ist, wobei diese drei Elemente über Schrägflächen derart zusammenwirken, dass ein durch die Evakuierung des Innenraumes auf die Druckleistenanordnung ausgeübter Druck die Erzeugung eines lateral auf die beiden Bauteilränder wirkenden Druckes bewirkt.

Es ist daher eine Aufgabe der vorliegenden Erfindung, bei einem Vakuumaufbau nach dem Oberbegriff des Anspruchs 1 bzw. bei einem Herstellungsverfahren nach dem Oberbegriff des Anspruchs 5 den Anwendungsbereich im Hinblick auf verschiedene Formgestaltungen und gewünschte laterale Druckbeaufschlagungen zu erweitern.

Diese Aufgabe wird gemäß der Erfindung durch einen Vakuumaufbau nach Anspruch 1 bzw. ein Verfahren zur Herstellung eines Bauteils nach Anspruch 5 gelöst. Die abhängigen Ansprüche betreffen vorteilhafte Weiterbildungen der Erfindung.

Der Begriff "Evakuierung" soll im engeren Sinne jede nennenswerte Druckabsenkung im Innenraum der Umhüllung des Vakuumaufbaus bezeichnen. Ganz allgemein soll hierunter jedoch auch jede Maßnahme fallen, durch welche bewirkt wird, dass der Druck im Innenraum wesentlich kleiner als der Druck auf der Außenseite der Umhüllung ist. Falls eine besonders große Druckdifferenz zwischen Innen- und Außenraum der Umhüllung gewünscht ist, so kann dies durch Verbringen des Vakuumaufbaus in eine Druckkammer bzw. einen Druckkessel bewerkstelligt werden, wobei die damit bewirkte Erhöhung des Außendruckes, falls erforderlich, auch noch durch eine Wärmebeaufschlagung unterstützt werden kann.

Durch die bei der Erfindung vorgesehene(n) Druckleistenanordnung(en) lässt sich vorteilhaft eine gleichmäßige und definierte Anpresskraft an einem oder mehreren betreffenden Bauteilrändem erreichen. Die Druckleistenanordnung fungiert gewissermaßen als eine "Druckumleitungseinrichtung" zur Umleitung eines "Vertikaldruckes" (orthogonal zur Auflagefläche auf die Druckleistenanordnung einwirkend) in eine laterale Richtung (parallel zur Auflagefläche auf den Bauteilrand einwirkend).

Die erfindungsgemäß erzeugte laterale Andruckkraft kann beispielsweise dazu genutzt werden, zur Ausbildung des oder der betreffenden Bauteilränder vorgesehene Bauteilkomponenten bei der Herstellung des Bauteils an einen Bauteilkorpus bzw. dessen Rand anzudrücken, um eine besonders innige Verbindung zwischen Bauteilkorpus und Bauteilrand zu erzielen (z. B. durch Verklebung und/oder Fasermaterial-Kompaktierung).

Die laterale Andruckkraft kann insbesondere auch für eine wohldefinierte "Stauchung" des betreffenden Bauteilrandes genutzt werden. Wie es aus der noch folgenden Beschreibung eines Ausführungsbeispiels der Erfindung hervorgeht, kann die Druckleistenanordnung so ausgebildet sein, dass mit dem lateralen Druck eine (wegmäßig) exakt definierte laterale Stauchung einer den Bauteilrand ausbildenden Bauteilkomponente erzielt wird.

Der erfindungsgemäße Vakuumaufbau kann für die Herstellung von nahezu beliebigen Formen von Bauteilen und Bauteilrändem verwendet werden.

Insbesondere kann es sich um Faserverbundbauteile im weitesten Sinne handeln, also Bauteile, die zumindest teilweise aus einem Matrixmaterial mit darin eingebetteten Verstärkungsfasern hergestellt werden. Ein speziellerer Anwendungsfall ist das Ankleben bzw. Anlaminieren eines mit Matrixmaterial infiltrierten Fasermaterials (ein- oder mehrschichtiges Fasermaterial) an wenigstens einem Rand eines Bauteilkorpus, wobei der Bauteilkorpus selbst wiederum aus einem Faserverbund und/oder anderen (z. B. metallischen) Komponenten bestehen kann.

In einer Ausführungsform ist vorgesehen, dass der Vakuumaufbau bei der Herstellung eines flächigen Bauteils verwendet wird. Darunter sollen insbesondere Bauteile fallen, deren minimale laterale Ausdehnung wenigstens doppelt, insbesondere wenigstens drei Mal so groß wie deren maximale Ausdehnung orthogonal zur Auflagefläche (Vertikalrichtung) ist.

Mit der Erfindung können beispielsweise sehr vorteilhaft Strukturbauteile und Module für Fahrzeuge, insbesondere Luftfahrzeuge hergestellt werden. Eine bevorzugte Verwendung der Erfindung ist z. B. die Herstellung von Flügeln für Luftfahrzeuge, insbesondere von Tragflügeln, oder Teilen davon, z. B. so genannten "Endkanten" (z. B. Querruder, Seitenruder, Höhenruder oder andere an einem Flugzeugflügel oder Flugzeugrumpf bewegbar angeordnete Klappen).

Für die konkrete Ausgestaltung der Druckleistenanordnung gibt es vielfältige Möglichkeiten.

Gemäß einer Ausführungsform ist beispielsweise vorgesehen, dass die Druckleisten über wenigstens eine Schrägflächenkombination zusammenwirken, die in einem Winkel im Bereich von 30° bis 85° geneigt zur Auflagefläche verläuft. Jede Schrägflächenkombination kann hierbei durch aneinander anliegende bzw. aneinander abgleitende ebene Schrägflächen von einander benachbarten Druckleisten gebildet sein. Der Neigungswinkel einer solchen Schrägflächenkombination bestimmt ein "Übersetzungsverhältnis" bei der Erzeugung des lateral auf den Bauteilrand wirkenden Druckes in Abhängigkeit von dem in Vertikalrichtung (orthogonal zur Auflagefläche) wirkenden Druckes. Mit einem relativ großen Neigungswinkel lässt sich hierbei z. B. sogar eine von einer Druckleiste auf den Bauteilrand in Lateralrichtung wirkende Druckkraft erzeugen, die größer als eine auf die damit zusammenwirkende Druckleiste ausgeübte Druckkraft in Vertikalrichtung ist. Gemäß einer Ausführungsform beträgt der Neigungswinkel mindestens 30°, insbesondere mindestens 40°. Besonders groß wird die lateral wirkende Druckkraft, wenn ein Neigungswinkel von knapp unter 90° gewählt wird. Zu bedenken ist allerdings, dass in vielen Anwendungsfällen ein dann besonders groß ausfallender lateraler Druck (beispielsweise größer als der vertikale Druck) gar nicht erwünscht ist, so dass oftmals ein Neigungswinkel von höchstens 85°, insbesondere höchstens 70° bevorzugt ist. Außerdem ist zu bedenken, dass ein besonders groß gewählter Neigungswinkel diejenige Wegstrecke verringert, um welche die den Lateraldruck auf den Bauteilrand ausübende Druckleiste bei einer Vertikalverlagerung der damit zusammenwirkenden Druckleiste zum Bauteilrand hin verschoben werden kann. Insbesondere wenn im konkreten Anwendungsfall eine solche Lateralverschiebung der den Lateraldruck auf den Bauteilrand ausübenden Druckleiste erwünscht (bzw. zur Ausübung eines bestimmten Lateraldruckes erforderlich) ist, so sollte der Neigungswinkel der betreffenden Schrägflächen daher nicht allzu groß gewählt werden.

In einer Ausführungsvariante der Erfindung ist vorgesehen, dass eine nicht unmittelbar dem Bauteilrand benachbarte Druckleiste der Druckleistenanordnung mit einer Fixierungseinrichtung zum Fixieren dieser Druckleiste an der Auflagefläche versehen ist. Durch diese Maßnahme kann die betreffende Druckleiste vorteilhaft in Lateralrichtung derart abgestützt werden, dass diese bei der Erzeugung des lateral auf den Bauteilrand wirkenden Druckes (durch wenigstens eine weitere, zwischen dem Bauteilrand und dieser fixierten Druckleiste angeordnete Druckleiste) nicht in Lateralrichtung "vom Bauteilrand weg ausweichen" kann. Hierfür genügt es, wenn die mittels der Fixierungseinrichtung bewirkte Fixierung zumindest eine Bewegung der betreffenden Druckleiste in Richtung von dem Bauteilrand weg verhindert.

Für die Gestaltung der gemäß dieser Ausführungsvariante verwendeten Fixierungseinrichtung gibt es vielfältige Möglichkeiten. Gemäß einer Ausführungsform umfasst die Fixierungseinrichtung eine oder mehrere quer, insbesondere orthogonal zur Auflagefläche der Basis verlaufende Bohrungen (z. B. Gewindebohrungen) in der Druckleiste, so dass durch Einstecken eines oder mehrerer Fixierstifte (bzw. Einschrauben von Fixierschrauben) eine Befestigung der betreffenden Druckleiste an der Auflagefläche erfolgen kann. Jeder solche Fixierstift bzw. jede solche Fixierschraube kann sich hierbei aus der Bohrung der Druckleiste heraus und weiter in eine entsprechende Bohrung der Basis erstrecken, um eine zuverlässige Verankerung der betreffenden Druckleiste an der Auflagefläche der Basis zu bewirken. In einer Ausführungsform ist die Basis mit einer Mehrzahl solcher korrespondierender Befestigungsbohrungen versehen, so dass die betreffende Druckleiste in verschiedenen, je nach Anwendungsfall gewünschten Positionen an der Auflagefläche der Basis fixierbar ist.

In einer Ausführungsform ist vorgesehen, dass die Befestigungsbohrungen der Basis diese Basis jeweils vollständig durchsetzen, so dass Befestigungsstifte bzw. Befestigungsschrauben von der Unterseite der Basis her durch die Basis hindurch und in die Befestigungsbohrungen der Druckleiste hinein eingesteckt bzw. eingeschraubt werden können. Bei dieser Ausführungsform sind gegebenenfalls besondere Abdichtungsmaßnahmen vorzusehen, um einen Lufteintritt durch die Durchgangsbohrungen der Basis hindurch in den evakuierten Innenraum hinein zu verhindern.

Gemäß einer alternativen Ausführungsform, welche keine solchen Abdichtungsmaßnahmen erfordert, ist vorgesehen, dass die Befestigungsbohrungen der Basis diese Basis nicht vollständig durchsetzen, also als Sacklöcher ausgebildet sind, so dass die Befestigungsstifte bzw. Befestigungsschrauben sich von der Oberseite der Basis her in diese Sacklöcher der Basis hinein erstrecken können. In einer spezielleren Ausführung sind die Bohrungen der Druckleiste als Durchgangsbohrungen ausgebildet, so dass die Befestigungsstifte bzw. Befestigungsschrauben von oben her, durch die Druckleiste hindurch, und weiter in die Sacklöcher der Basis eingesteckt bzw. eingeschraubt werden können.

In einer Ausführungsform ist vorgesehen, dass die Druckleistenanordnung (wenigstens) drei nebeneinander entlang des betreffenden Bauteilrandes verlaufende Druckleisten umfasst, von denen die mittlere Druckleiste über beiderseits vorgesehene Schrägflächenkombinationen mit den beiden äußeren Druckleisten zusammenwirkt.

Für beide Schrägflächenkombinationen können bevorzugt Neigungswinkel wie weiter oben bereits erläutert gewählt werden, wobei die beiden Neigungswinkel der an beiden Seiten der mittleren Druckleiste vorgesehenen Schrägflächenkombinationen identisch oder voneinander verschieden gewählt werden können.

Diejenige Druckleiste, welche zwischen dem Bauteilrand und der mittleren Druckleiste angeordnet ist, kann beispielsweise unmittelbar mit ihrer dem Bauteilrand zugewandten Seitenfläche diesen Bauteilrand in Lateralrichtung belasten. Hierbei ergibt sich eine besonders gleichmäßige Verteilung des erzeugten Lateraldruckes z. B. dann, wenn die betreffende Seitenfläche dieser Druckleiste an die Formgestaltung des Bauteilrandes angepasst ist. Im einfachsten Fall sind dieser Bauteilrand und dementsprechend die diesem Bauteilrand zugewandte Seitenfläche der Druckleiste eben und erstrecken sich z. B. orthogonal zur Auflagefläche.

Gemäß einer Ausführungsform ist vorgesehen, dass während der Lateraldruckbeaufschlagung des Bauteilrandes eine mehr oder weniger ausgeprägte Stauchung des Bauteilrandes erfolgt, durch welche dem Bauteilrand bzw. der seitlichen Bauteilrandoberläche erst die am fertigen Bauteil gewünschte Form verliehen wird. Zu diesem Zweck kann die am Bauteilrand den Lateraldruck ausübende Seitenfläche der Druckleiste mit der (für das fertige Bauteil) gewünschten Formgestaltung ausgebildet sein (z. B. eben, oder aber gekrümmt, gestuft etc., je nach gewünschter Endgeometrie des Bauteilrandes). Damit kann vorteilhaft eine spätere Nachbearbeitung des Bauteilrandes zur Erzielung einer gewünschten Endgeometrie vereinfacht oder sogar ganz entbehrlich werden.

Alternativ zu einer unmittelbaren Anlage dieser äußeren Druckleiste am Bauteilrand kommt z. B. in Betracht, bei dem Vakuumaufbau noch wenigstens eine "Adapterleiste" zwischen der (den Lateraldruck ausübenden) Druckleiste und dem Bauteilrand zwischenzufügen, beispielsweise um mit einer derartigen Adapterleiste eine Formanpassung der den Lateraldruck ausübenden Fläche an die Form des Bauteilrandes zu bewerkstelligen.

Die andere der beiden äußeren Druckleisten, also diejenige Druckleiste, welche auf der dem Bauteilrand abgewandten Seite der mittleren Druckleiste angeordnet ist, kann vorteilhaft mit einer Fixierungseinrichtung der oben bereits beschriebenen Art versehen sein, um eine Bewegung dieser Druckleiste in Richtung von dem Bauteilrand weg zu verhindern. Diese Druckleiste dient dann gewissermaßen als "Abstützleiste", die ein Zurückweichen der gesamten Druckleistenanordnung vom Bauteil weg verhindert.

Als eine Alternative zu einer zwecks Abstützung fixierbaren Druckleiste kommt als eine weitere Ausführungsvariante der Erfindung in Betracht, anstelle einer solchen fixierbaren Druckleiste eine gleichwertige Formgestaltung der Auflagefläche der Basis vorzusehen ("Abstützschulter") bzw. die Auflagefläche an dieser Stelle mit einer festen "Abstützleiste" zu versehen. Dies besitzt allerdings den Nachteil, dass dann die Position dieser Abstützleiste bzw. Abstützschulter der Auflagefläche von vornherein festgelegt ist. Daher ist eine Lösung mit einer nachträglich fixierbaren Abstützleiste zumeist besser, insbesondere wenn die konkrete Position dieser Abstützleiste variabel wählbar sein soll (z. B. um verschieden dimensionierte Bauteile unter Verwendung ein und derselben Basis bzw. Auflagefläche der Basis herzustellen).

Die mehreren Druckleisten der Druckleistenanordnung können z. B. jeweils aus Metall gefertigt sein. In einer Ausführungsform ist die Druckleistenanordnung aus geradlinig verlaufenden Druckleisten, insbesondere geraden Druckleistenprofilen zusammengesetzt. Diese Ausführung eignet sich insbesondere für die Herstellung von Bauteilen mit einem dementsprechend geradlinigen Verlauf des betreffenden Bauteilrandes.

Die Druckleiste, die vor dem Bauteilrand liegt, kann in Strak und Kontur jede beliebige Form entsprechend des gewünschten Bauteilrandes aufweisen. Insbesondere sind z. B. Radien, verschiedenste Winkel, Fasen und Abstufungen im Bauteilschnitt des Bauteilrandes möglich.

Die auf der Basis fixierte Druckleiste bzw. "Abstützleiste" sollte in der Regel parallel zum Bauteilrand verlaufend positioniert und fixiert sein. Eine mittlere Druckleiste und/oder eine unmittelbar dem Bauteilrand benachbart verlaufende Druckleiste können z. B. jeweils in ganzer Länge mit den gleichen Querschnitten, z. B. als geradlinig langgestreckte Profilleisten, vorgesehen sein.

Gemäß eines zweiten Aspekts der Erfindung ist ein Verfahren zur Herstellung eines Bauteils unter Verwendung eines Vakuumaufbaus der oben beschriebenen Art vorgesehen.

In einer Ausführungsvariante des Herstellungsverfahrens ist vorgesehen, dass eine nicht unmittelbar dem Bauteilrand benachbarte Druckleiste der Druckleistenanordnung an der Auflagefläche der Basis fixiert wird, bevor durch die Evakuierung des Innenraumes der Umhüllung die Druckbeaufschlagung des Bauteils und Lateraldruckerzeugung am Bauteilrand bewirkt wird.

Die oben bereits für den Vakuumaufbau beschriebenen besonderen Ausführungsformen und Weiterbildungen können in analoger Weise auch für das erfindungsgemäße Herstellungsverfahren eingesetzt werden.

Die Erfindung wird nachfolgend anhand eines Ausführungsbeispiels mit Bezug auf die beigefügten Zeichnungen weiter beschrieben. Es stellen dar:
- **Fig. 1**: eine schematische Darstellung einer Bauteilfertigung unter Verwendung eines Vakuumaufbaus, gemäß einer nicht-erfindungsgemäßen Ausführung,
- **Fig. 2**: eine der Fig. 1 entsprechende Darstellung eines erfindungsgemäßen Ausführungsbeispiels, und
- **Fig. 3**: ein Detail aus Fig. 2 in einer modifizierten Ausführung.

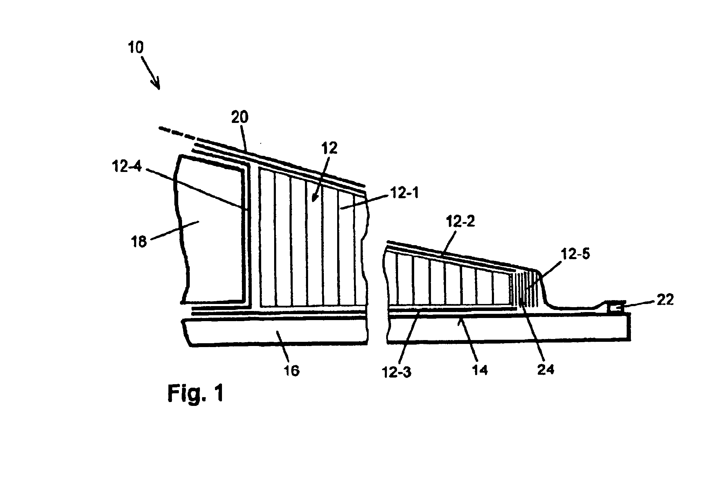

Fig. 1 veranschaulicht in einer schematischen Seitenansicht einen Vakuumaufbau 10 zur Druckbeaufschlagung eines Bauteils 12 während seiner Herstellung.

Bei dem Bauteil 12 handelt es sich im dargestellten Ausführungsbeispiel um eine Endkante eines Flugzeug-Tragflügels, die aus mehreren Bauteilkomponenten 12-1 bis 12-5 zusammengesetzt wird.

Bei den Bauteilkomponenten 12-1 bis 12-5 handelt es sich um eine Aluminium-Wabenstruktur 12-1, diese Wabenstruktur 12-1 umgebende bzw. begrenzende Aluminium-Bleche 12-2, 12-3 und 12-4 sowie ein mehrschichtiges, mit einem Harzmaterial (z. B. Epoxidharz) vorimprägniertes textiles Halbzeug (Prepreg) 12-5. In der Figur nicht dargestellt sind Klebstoffschichten, die jeweils zwischen der Wabenstruktur 12-1 und den angrenzenden Blechen 12-2 bis 12-4 zwischengefügt sind.

Bei der Herstellung des Bauteils 12 soll durch eine Druckbeaufschlagung eine innige Verbindung der Bauteilkomponenten 12-1 bis 12-5 erzielt werden. Die Aluminium-Bleche 12-2, 12-3 und 12-4 werden an einem in der Figur oberen, unteren bzw. seitlich linken Rand der Aluminium-Wabenstruktur 12-1 angeklebt, wohingegen das mehrschichtige vorimprägnierte textile Halbzeug (Prepreg) 12-5 durch dessen Aushärtung fest mit dem in der Figur seitlich rechten Rand der Wabenstruktur 12-1 verbunden wird. Das Prepreg 12-5 ist in diesem Beispiel aus 8 Lagen von mit Epoxidharz vorimprägnierten Glasfaserlagen (z. B. Gewebe oder Geflechte) gebildet.

Zu diesem Zweck werden die einzelnen Bauteilkomponenten 12-1 bis 12-5 zunächst wie in Fig. 1 dargestellt an einer Auflagefläche 14 einer Basis (Werkzeug) 16 angeordnet. In Fig. 1 links dargestellt ist ein "Holmfüllstück" 18, welches einen Teil des auch die Basis 16 aufweisenden Herstellungswerkzeuges darstellt und stationär bezüglich der Basis 16 angeordnet ist. Abweichend vom dargestellten Ausführungsbeispiel, bei welchem die Auflagefläche 14 (entsprechend der Unterseite des herzustellenden Bauteils 12) eben ist, könnte die Auflagefläche 14 auch eine Krümmung bzw. anderweitige Formgestaltung besitzen.

Sodann wird das Bauteil 12 mit einer luftdichten Folie 20 abgedeckt, diese Folie 20 zur Auflagefläche 14 hin abgedichtet, und dann ein Innenraum der mit der Folie 20 geschaffenen Umhüllung evakuiert. Hierfür geeignete luftdichte bzw. gasdichte Folien bzw. Folienmaterialien sind aus dem Stand der Technik bekannt (z. B. auf Basis von PTFE, FEP etc.). Bei einer Bauteilherstellung unter erhöhter Temperatur kann insbesondere eine hinreichend (z. B. bis 200 °C) hitzebeständige Folie eingesetzt werden.

Diese Evakuierung des Raumes unter der Folie 20 bewirkt, dass der über der Folie herrschende Umgebungsdruck (z. B. atmosphärischer Druck) über die Folie 20 einen entsprechenden Druck auf das im Innenraum zwischen Folie 20 und Auflagefläche 14 eingeschlossene Bauteil 12 ausübt.

Die Evakuierung des Innenraumes erfolgt mittels einer (nicht dargestellten) Vakuumpumpe, welche über eine Vakuumleitungspassage mit diesem Innenraum verbunden ist. Die Vakuumpassage kann z. B. als ein Schlauch ausgebildet sein, welcher an einer Stelle der Folie 20 diese Folie 20 durchsetzend mit dem Innenraum verbunden ist. Alternativ kann die Vakuumpassage auch über einen durch die Basis 16 verlaufenden Kanal in den Innenraum münden.

Die Abdichtung der Folie 20 zur Auflagefläche 14 hin ist im dargestellten Beispiel durch eine am Umfang des Bauteils 12 umlaufend vorgesehen Dichtung 22 bewerkstelligt.

Um die durch Evakuierung des Innenraumes bewirkte Druckbeaufschlagung des Bauteils 12 zu steigern, kann der gesamte in Fig. 1 dargestellte Vakuumaufbau 10 schließlich noch in eine Druckkammer (Autoklav) verbracht werden, um den Vakuumaufbau 10 einem erhöhten Umgebungsdruck auszusetzen (typischerweise etwa 2 bis 5 bar).

Nachteilig ist bei dem dargestellten Vakuumaufbau 10 bzw. dem damit realisierten Herstellungsverfahren für das Bauteil 12 eine nur unzureichende, nicht gut definierte und unter Umständen auch ungleichmäßige Druckbeaufschlagung der einen in der Figur seitlich rechten Bauteilrand 24 ausbildenden Bauteilkomponente 12-5 in lateraler Richtung, d. h. parallel zur Auflagefläche 14 in diesem Bereich.

Die ungleichmäßige Druckbeaufschlagung kann insbesondere dazu führen, dass die hier als mehrschichtiges vorimprägniertes Laminat (Prepreg) ausgebildete Bauteilkomponente 12-5 nicht optimal an den Bauteilkorpus (hier: Aluminium-Wabenstruktur 12-1) angebunden wird und/oder die einzelnen Schichten dieser Bauteilkomponente 12-5 am fertigen Bauteil 12 zu einer Delaminierung neigen.

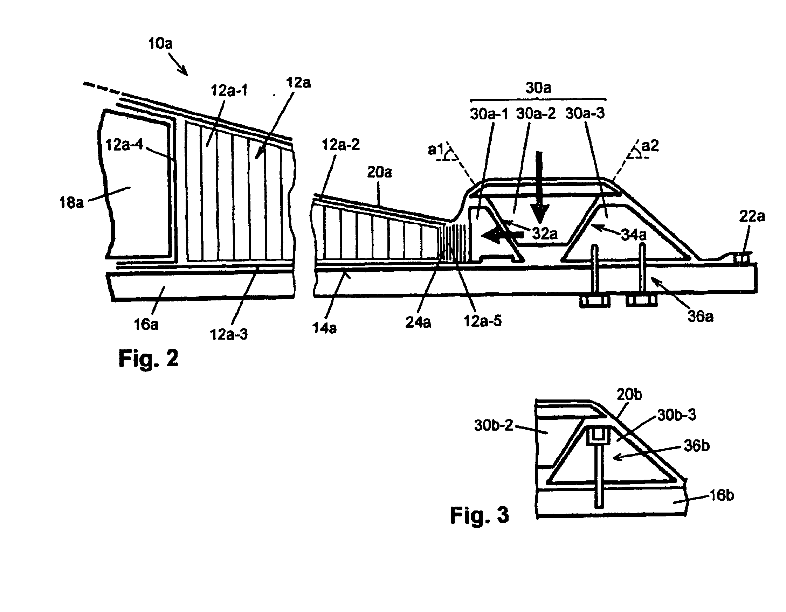

Diese Problematik kann durch eine geringfügige Modifikation des Vakuumaufbaus 10 beseitigt werden. Ein entsprechendes Ausführungsbeispiel der Erfindung wird nachfolgend mit Bezug auf Fig. 2 beschrieben.

Bei der nachfolgenden Beschreibung des erfindungsgemäßen Ausführungsbeispiels werden für gleich wirkende Komponenten die gleichen Bezugszahlen verwendet, jeweils ergänzt durch einen kleinen Buchstaben "a" zur Unterscheidung der Ausführungsform. Dabei wird im Wesentlichen nur auf die Unterschiede zu dem bereits mit Bezug auf die Fig. 1 beschriebenen Ausführungsbeispiel eingegangen und im Übrigen hiermit ausdrücklich auf die Beschreibung des vorangegangenen Ausführungsbeispiels verwiesen.

Fig. 2 zeigt einen Vakuumaufbau 10a zur Druckbeaufschlagung eines Bauteils 12a (identisch zum Bauteil 12).

Der Vakuumaufbau 10a besitzt die gleichen Bestandteile wie der oben bereits beschriebene Vakuumaufbau 10, darüber hinaus jedoch noch eine an einem in der Figur seitlich rechten Bauteilrand 24a zusammen mit einem Bauteil 12a im Innenraum einer luftdichten Folie (Umhüllung) 20a angeordnete Druckleistenanordnung 30a.

Die Druckleistenanordnung 30a wird somit ebenfalls von der Folie 20a in Vertikalrichtung (orthogonal) zu einer Auflagefläche 14a einer Basis 16a druckbelastet. Diese vertikale Druckbelastung ist in Fig. 2 durch einen vertikalen Pfeil symbolisiert.

Die Druckleistenanordnung 30a ist im dargestellten Ausführungsbeispiel von drei Druckleisten 30a-1, 30a-2 und 30a-3 gebildet, welche wie dargestellt in Lateralrichtung (parallel zur Auflagefläche 14a und orthogonal zum Bauteilrand 24a) einander benachbart jeweils entlang des Bauteilrandes 24a verlaufen.

Ganz allgemein ist die Druckleistenanordnung (hier: Druckteisten 30a-1, 30a-2 und 30a-3) aus mehreren Druckleisten zusammengesetzt, die über Schrägflächen derart zusammenwirken, dass der durch die Evakuierung des Innenraumes auf die Druckleistenanordnung ausgeübte Druck ("Vertikaldruck") die Erzeugung eines lateral auf den Bauteilrand wirkenden Druckes ("Lateraldruck") bewirkt.

In Fig. 2 ist ein solcher Lateraldruck durch den horizontal verlaufenden Pfeil symbolisiert. Der Lateraldruck wird erzeugt durch die Zusammenwirkung der in der Druckleistenanordnung 30a mittleren Druckleiste 30a-2 mit den beiderseits davon benachbart angeordneten Druckleisten 30a-1 und 30a-3. Diese Zusammenwirkung erfolgt über eine in Fig. 2 linke Schrägflächenkombination 32a zwischen den Druckleisten 30a-1 und 30a-2, und eine in Fig. 2 rechte Schrägflächenkombination 34a zwischen den Druckleisten 30a-2 und 30a-3.

Die Druckleiste 30a-3 ist im dargestellten Ausführungsbeispiel mittels einer Verschraubung 36a an der Basis 16a bzw. der Auflagefläche 14a fixiert.

Wenn in der dargestellten Situation der Vertikaldruck auf die mittlere Druckleiste 30a-2 einwirkt, so werden an den Schrägflächenkombinationen 32a und 34a jeweilige Lateraldruckkomponenten erzeugt, deren Größe von den an den Schrägflächenkombinationen 32a, 34a vorgesehenen Neigungswinkeln a1 und a2 abhängt. Alle 3 Druckleisten 30a-1 bis 30a-3 sind im dargestellten Beispiel als (entsprechend dem Bauteilrand 24a) geradlinig verlaufende Metallprofilleisten ausgebildet.

Im dargestellten Ausführungsbeispiel betragen die Neigungswinkel a1 und a2 jeweils etwa 55°, woraus eine laterale Druckkraft resultiert, welche etwa dem 0,7-fachen der Vertikaldruckkraft entspricht. Durch eine Modifikation der Neigungswinkel a1 und a2 lässt sich dieses "Kraftübersetzungsverhältnis" (zwischen Vertikaldruckkraft und Lateraldruckkraft) in weiten Bereichen dem konkreten Anwendungsfall anpassen. Für das "Druckübersetzungsverhältnis" zwischen Vertikaldruck und Lateraldruck (jeweils Kraft pro Fläche) spielt auch noch das Größenverhältnis derjenigen Flächen eine Rolle, an welchen die Folie 20a die Druckleiste 30a-2 vertikal belastet bzw. die Druckleiste 30a-1 die Bauteilkomponente 12a-5 lateral belastet. Bei der konkreten Auslegung der Druckleistenanordnung 30a ist daher auch dieses Flächenverhältnis zu berücksichtigen. In diesem Zusammenhang ist anzumerken, dass abweichend vom dargestellten Ausführungsbeispiel auch eine nicht-ebene Seitenfläche an der Druckleiste (30a-1) eingesetzt werden könnte, um gezielt eine ungleichmäßige Lateraldruckbelastung der betreffenden Bauteilkomponente (12a-5) zu erzielen, falls gewünscht.

Zusammenfassend dient die fixierte Druckleiste 30a-3 des Vakuumaufbaus 10a gemäß des beschriebenen Ausführungsbeispiels gewissermaßen als eine Ausgangsdruckleiste und -fixierung, die auf ihrer dem Bauteil 12a zugewandten Seite eine schräge Kantenführung aufweist, um die vertikal zu den Druckleisten 30a-1 und 30a-3 geführte mittlere Druckleiste 30a-2 keilartig aufzunehmen. Die Druckleiste 30a-1 schließt an das Bauteil 12a bzw. dessen Bauteilrand 24a an und besitzt auf ihrer dem Bauteil 12a abgewandten Seite ebenfalls eine zur Aufnahme der vertikal geführten mittleren Druckleiste 30a-2 schräge Kantenführung. Beim Verfahrensablauf wird über die nach unten (vertikal) geführte Kraft der mittleren Druckleiste 30a-2 mit der beiderseitigen schrägen Kantenführung (parallel zu den Schrägflächen der Druckleisten 30a-1 und 30a-2) der Kraftverlauf zur Druckleiste 30a-1 umgeleitet (horizontaler Druckverlauf). Die Druckleiste 30a-1 wird somit gleichmäßig und definiert an die Verbundkonstruktion des Bauteils 12a angedrückt.

Vorteilhaft bewirkt die Druckleistenanordnung 30a im dargestellten Ausführungsbeispiel, dass die Bauteilkomponente 12a-5 (Faserverbundaminat) bei ihrer Kompaktierung und Aushärtung zuverlässig und mit sehr gleichmäßiger Lateraldruckbeaufschlagung am Bauteilkorpus 12-1 angepresst wird und somit den Bauteilrand 24a ausbildet.

Eine solche gleichmäßige Lateraldruckverteilung entlang des Bauteilrandes 24a liefert eine gleichmäßige Oberflächengüte und -beschaffenheit sowie eine hinreichende Verdichtung des mehrschichtigen Laminats 12a-5 in der Verbundkonstruktion, so dass eine Delamination am fertigen Bauteil 12a vermieden wird.

Eine Besonderheit des dargestellten Beispiels besteht darin, dass eine Vertikalbewegung der mittleren Druckleiste 30a-2 durch einen definierten mechanischen Anschlag begrenzt wird, so dass die maximale Vertikalbewegung und dementsprechend die maximale Lateralbewegung der den Lateraldruck ausübenden Druckleiste 30a-1 begrenzt ist. In Fig. 2 sind an der Oberseite der mittleren Druckleiste 30a-2 hierfür geeignete seitliche Vorsprünge zu erkennen, welche bei einer Vertikalbewegung an die Oberseiten der äußeren Druckleisten 30a-1 und 30a-2 anstoßen und somit die Vertikalbewegung der mittleren Druckleiste 30a-2 begrenzen. Als Alternative zu dieser Art von Vertikalbewegungsanschlag kommt z. B. in Betracht, eine "Anschlagleiste" einer bestimmten Höhe in Fig. 2 unterhalb der mittleren Druckleiste 30a-2 einzulegen (nicht dargestellt), deren Oberseite dann einen Anschlag für die Unterseite der Druckleiste 30a-2 bei deren Absenkbewegung bildet.

Eine anfänglich (vor Evakuierung des Innenraumes der Umhüllung 20a) gewünschte Höhenposition der mittleren Druckleiste 30a-2 ergibt sich im dargestellten Beispiel durch die anfänglich vorgenommene Anordnung der drei Druckleisten 30a-1 bis 30a-3 in Lateralrichtung. Um diese z. B. manuell durchgeführte Anordnung zu erleichtern, kann die mittlere Druckleiste 30a-2 z. B. mit einer Federeinrichtung versehen sein (nicht dargestellt), welche sich an der Auflagefläche 14a abstützt und die Druckleiste 30a-2 - unter Überwindung von deren Gewichtskraft - im gewünschten Anfangsabstand (Höhe) zur Auflagefläche hält, und welche nach Beginn der Evakuierung durch die Vertikaldruckbeaufschlagung "überdrückt" wird.

Durch Vorsehen eines Vertikalbewegungsanschlages wird eine wegmäßig wohldefinierte "laterale Stauchung" des Bauteilranndes 24a erzielt, die außer zur Verdichtung des Laminates 12a-5 auch dazu genutzt wird, den vom Laminat 12a-5 gebildeten seitlichen Rand des Bauteils 12 in die gewünsche "Endkonturgeometrie" zu bringen (so dass an dieser Stelle keine spätere Nachbearbeitung erforderlich ist).

Im dargestellten Ausführungsbeispiel ist die Druckleistenanordnung 30a an lediglich einem Bauteilrand (in Fig. 2 rechts) angeordnet. Am entgegengesetzten Bauteilrand (in Fig. 2 links) bildet das stationäre Holmfüllstück 18a auch eine laterale Abstützung, welche ein Ausweichen des Bauteils 12a infolge der Lateraldruckbeaufschlagung verhindert. Alternativ könnte das Bauteil 12a auch andersartig abgestützt werden.

Wie bereits erwähnt, verläuft im dargestellten Beispiel der Bauteilrand 24a geradlinig, so dass als Druckleisten 30a-1 bis 30a-3 entsprechend geradlinig verlaufende Druckleistenprofile verwendet werden können. Abweichend davon könnte jedoch auch die Druckleistenanordnung 30a insgesamt etwas gekrümmt verlaufen und/oder aus flexiblen Druckleisten zusammengesetzt sein. Alternativ könnte zur Anpassung an einen gekrümmt verlaufenden Bauteilrand 24a auch eine entsprechend gekrümmt formgestaltete Seitenfläche der Druckleiste 30a-1 vorgesehen sein, die am Bauteilrand 24a zur Anlage kommt.

Auch könnte abweichend vom dargestellten Beispiel die Druckleiste 30a-3 z. B. durch eine fest mit der Basis 16a bzw. der Auflagefläche 14a verbundene Leiste ersetzt werden bzw. eine solche Leiste als einstückig mit der Basis 16a verbundene "Abstützschulter" vorgesehen sein.

Fig. 3 veranschaulicht eine hinsichtlich der Druckleistenfixierung gegenüber dem Ausführungsbeispiel gemäß Fig. 2 modifizierte Ausführung.

Eine in Fig. 3 dargestellte Druckleiste 30b-3 ist ebenfalls mittels einer Verschraubung 36b an einer Basis 16b fixiert. Die Befestigungsbohrungen der Basis 16b sind jedoch als mit Innengewinde versehene Sacklöcher ausgebildet, so dass im dargestellten Beispiel Befestigungsschrauben (z. B. mit Innensechskant-Kopf) von der Oberseite der Basis 16b her in diese Sacklöcher eingeschraubt werden können. Die Bohrungen der Druckleiste 30b-3 sind als Durchgangsbohrungen ausgebildet, durch welche hindurch die Befestigungsschrauben von oben her hindurchgesteckt werden, wobei im eingeschraubten Zustand die Schraubenköpfe in einer jeweiligen Ausnehmung an der Mündung der Durchgangsbohrung aufgenommen werden.

## Patentansprüche

1. Vakuumaufbau (10a) zur Druckbeaufschlagung eines Bauteils (12a), insbesondere Faserverbundbauteils, während seiner Herstellung, umfassend
- eine Basis (16a) mit einer Auflagefläche (14a) für das Bauteil (12a), und
- eine luftdichte und zur Auflagefläche (14a) hin abdichtbare Umhüllung (20a) zum Abdecken des Bauteils (12a), um durch Evakuierung eines Innenraumes der Umhüllung (20a) die Druckbeaufschlagung des Bauteils (12a) zu bewirken,
- eine an wenigstens einem Bauteilrand (24a) zusammen mit dem Bauteil (12a) im Innenraum anordenbare Druckleistenanordnung (30a), die aus wenigstens zwei entlang des Bauteilrandes (24a) verlaufenden und über Schrägflächen (32a, 34a) derart zusammenwirkenden Druckleisten (30a-1, 30a-2, 30a-3) gebildet ist, dass ein **durch** die Evakuierung des Innenraumes auf die Druckleistenanordnung (30a) ausgeübter Druck die Erzeugung eines lateral auf den Bauteilrand (24a) wirkenden Druckes bewirkt,
**dadurch gekennzeichnet, dass** eine nicht unmittelbar dem Bauteilrand (24a) benachbarte Druckleiste (30a-3) der Druckleistenanordnung (30a) durch eine feste Abstützschulter bzw. Abstützleiste an der Auflagefläche (14a) der Basis (16a) ausgebildet ist oder mit einer Fixierungseinrichtung (36a) zum Fixieren dieser Druckleiste (30a-3) an der Auflagefläche (14a) versehen ist.

2. Vakuumaufbau (10a) nach Anspruch 1, wobei die Druckleisten (30a-1, 30a-2, 30a-3) über wenigstens eine Schrägflächenkombination (32a, 34a) zusammenwirken, die in einem Winkel im Bereich von 30° bis 85° geneigt zur Auflagefläche (14a) verläuft.

3. Vakuumaufbau (10a) nach einem der vorangehenden Ansprüche, wobei die Fixierungseinrichtung (36a) eine oder mehrere quer zur Auflagefläche (14a) verlaufende Bohrungen in der zu fixierenden Druckleiste (30a-3) umfasst.

4. Vakuumaufbau (10a nach einem der vorangehenden Ansprüche, wobei die Druckleistenanordnung (30a) drei Druckleisten (30a-1, 30a-2, 30a-3) umfasst, von denen die mittlere Druckleiste (30a-2) über beiderseits vorgesehene Schrägflächenkombinationen (32a, 34a) mit den beiden äußeren Druckleisten (30a-1, 30a-3) zusammenwirkt.

5. Verfahren zur Herstellung eines Bauteils (12a), insbesondere Faserverbundbauteils, umfassend eine Druckbeaufschlagung des Bauteils (12a) unter Verwendung eines Vakuumaufbaus (10a), welcher eine Basis (16a) mit einer Auflagefläche (14a) für das Bauteil (12a) und eine luftdichte und zur Auflagefläche (14a) hin abdichtbare Umhüllung (20a) zum Abdecken des Bauteils (12a) umfasst, um durch Evakuierung eines Innenraumes der Umhüllung (20a) die Druckbeaufschlagung des Bauteils (12a) zu bewirken,
wobei an wenigstens einem Bauteilrand (24a) zusammen mit dem Bauteil (12a) eine Druckleistenanordnung (30a) im Innenraum angeordnet wird, die aus wenigstens zwei entlang des Bauteilrandes (24a) verlaufenden und über Schrägflächen (32a, 34a) derart zusammenwirkenden Druckleisten (30a-1, 30a-2, 30a-3) gebildet ist, dass ein durch die Evakuierung des Innenraumes auf die Druckleistenanordnung (30a) ausgeübter Druck die Erzeugung eines lateral auf den Bauteilrand (24a) wirkenden Druckes bewirkt,
**dadurch gekennzeichnet, dass** eine nicht unmittelbar dem Bauteilrand (24a) benachbarte Druckleiste (30a-3) der Druckleistenanordnung (30a) durch eine feste Abstützschulter bzw. Abstützleiste an der Auflagefläche (14a) der Basis (16a) ausgebildet ist oder an der Auflagefläche (14a) fixiert wird.

## Claims

1. Vacuum assembly (10a) for the pressurization of a component (12a), in particular a fibre composite component, during the manufacture thereof, comprising
- a base (16a) with a rest surface (14a) for the component (12a), and
- an air-tight enclosure (20a), which can be sealed off with respect to the rest surface (14a), for covering the component (12a) in order to effect the pressurization of the component (12a) as a result of evacuation of an interior space of the enclosure (20a),
- a pressure strip arrangement (30a) which can be arranged together with the component (12a) in the interior space at at least one component edge (24a), which pressure strip arrangement is formed from at least two pressure strips (30a-1, 30a-2, 30a-3) which run along the component edge (24a) and which interact via oblique surfaces (32a, 34a) such that a pressure exerted on the pressure strip arrangement (30a) as a result of the evacuation of the interior space causes a pressure to be generated which acts laterally on the component edge (24a),
**characterized in that** a pressure strip (30a-3), which is not directly adjacent to the component edge (24a), of the pressure strip arrangement (30a) is formed by a fixed support shoulder or support strip on the rest surface (14a) of the base (16a) or is provided with a fixing device (36a) for fixing said pressure strip (30a-3) to the rest surface (14a).

2. Vacuum assembly (10a) according to Claim 1, wherein the pressure strips (30a-1, 30a-2, 30a-3) interact via at least one oblique surface combination (32a, 34a) which runs so as to be inclined with respect to the rest surface (14a) by an angle in the range of 30° to 85°.

3. Vacuum assembly (10a) according to one of the preceding claims, wherein the fixing device (36a) comprises one or more bores, running transversely with respect to the rest surface (14a), in the pressure strip (30a-3) to be fixed.

4. Vacuum assembly (10a) according to one of the preceding claims, wherein the pressure strip arrangement (30a) comprises three pressure strips (30a-1, 30a-2, 30a-3), of which the middle pressure strip (30a-2) interacts, via oblique surface combinations (32a, 34a) provided at both sides, with the two outer pressure strips (30a-1, 30a-3).

5. Method for manufacturing a component (12a), in particular fibre composite component, said method including pressurization of the component (12a) using a vacuum assembly (10a) which comprises a base (16a) with a rest surface (14a) for the component (12a) and which comprises an air-tight enclosure (20a), which can be sealed off with respect to the rest surface (14a), for covering the component (12a) in order to effect the pressurization of the component (12a) as a result of evacuation of an interior space of the enclosure (20a),
wherein a pressure strip arrangement (30a) is arranged together with the component (12a) in the interior space at at least one component edge (24a), which pressure strip arrangement is formed from at least two pressure strips (30a-1, 30a-2, 30a-3) which run along the component edge (24a) and which interact via oblique surfaces (32a, 34a) such that a pressure exerted on the pressure strip arrangement (30a) as a result of the evacuation of the interior space causes a pressure to be generated which acts laterally on the component edge (24a),
**characterized in that** a pressure strip (30a-3), which is not directly adjacent to the component edge (24a), of the pressure strip arrangement (30a) is formed by a fixed support shoulder or support strip on the rest surface (14a) of the base (16a) or is fixed to the rest surface (14a).

## Revendications

1. Assemblage à vide (10a) pour la sollicitation en pression d'un composant (12a), en particulier d'un composant renforcé par des fibres, lors de sa fabrication, comportant :
- une base (16a) pourvue d'une surface d'appui (14a) pour le composant (12a) et
- une enveloppe (20a), étanche à l'air et pouvant être rendue étanche en direction de la surface d'appui (14a), pour recouvrir le composant (12a), afin de provoquer la sollicitation en pression du composant (12a) en faisant le vide dans un espace intérieur de l'enveloppe (20a),
- un agencement de barres de pression (30a) pouvant être disposé sur au moins un bord de composant (24a) dans l'espace intérieur, conjointement avec le composant (12a), lequel agencement de barres de pression est formé d'au moins deux barres de pression (30a-1, 30a-2, 30a-3) s'étendant le long du bord de composant (24a) et coopérant par le biais de surfaces obliques (32a, 34a) de telle sorte qu'une pression exercée sur l'agencement de barres de pression (30a) en faisant le vide dans l'espace intérieur provoque la génération d'une pression agissant latéralement sur le bord de composant (24a),
**caractérisé en ce qu'**une barre de pression (30a-3) de l'agencement de barres de pression (30a) qui n'est pas immédiatement adjacente au bord de composant (24a) est réalisée par un épaulement d'appui ou une barre d'appui fixe sur la surface d'appui (14a) de la base (16a) ou est pourvue d'un dispositif de fixation (36a) pour la fixation de cette barre de pression (30a-3) sur la surface d'appui (14a).

2. Assemblage à vide (10a) selon la revendication 1, dans lequel les barres de pression (30a-1, 30a-2, 30a-3) coopèrent par le biais d'au moins une combinaison de surfaces obliques (32a, 34a) qui s'étend de manière inclinée par rapport à la surface d'appui (14a) suivant un angle dans la plage de 30° à 85°.

3. Assemblage à vide (10a) selon l'une quelconque des revendications précédentes, dans lequel le dispositif de fixation (36a) comporte un ou plusieurs alésages s'étendant transversalement par rapport à la surface d'appui (14a) dans la barre de pression (30a-3) devant être fixée.

4. Assemblage à vide (10a) selon l'une quelconque des revendications précédentes, dans lequel l'agencement de barres de pression (30a) comporte trois barres de pression (30a-1, 30a-2, 30a-3) parmi lesquelles la barre de pression centrale (30a-2) coopère, par le biais de combinaisons de surfaces obliques (32a, 34a) prévues de part et d'autre, avec les deux barres de pression extérieures (30a-1, 30a-3).

5. Procédé de fabrication d'un composant (12a), en particulier d'un composant renforcé par des fibres, comportant une sollicitation en pression du composant (12a) en utilisant un assemblage à vide (10a) qui comporte une base (16a) pourvue d'une surface d'appui (14a) pour le composant (12a) et une enveloppe (20a), étanche à l'air et pouvant être rendue étanche en direction de la surface d'appui (14a), pour recouvrir le composant (12a), afin de provoquer la sollicitation en pression du composant (12a) en faisant le vide dans un espace intérieur de l'enveloppe (20a),
un agencement de barres de pression (30a) étant disposé sur au moins un bord de composant (24a) dans l'espace intérieur, conjointement avec le composant (12a), lequel agencement de barres de pression est formé d'au moins deux barres de pression (30a-1, 30a-2, 30a-3) s'étendant le long du bord de composant (24a) et coopérant par le biais de surfaces obliques (32a, 34a) de telle sorte qu'une pression exercée sur l'agencement de barres de pression (30a) en faisant le vide dans l'espace intérieur provoque la génération d'une pression agissant latéralement sur le bord de composant (24a),
**caractérisé en ce qu'**une barre de pression (30a-3) de l'agencement de barres de pression (30a) qui n'est pas immédiatement adjacente au bord de composant (24a) est réalisée par un épaulement d'appui ou une barre d'appui fixe sur la surface d'appui (14a) de la base (16a) ou est fixée sur la surface d'appui (14a).
